# EUROPEAN PATENT APPLICATION

(11) **EP 4 625 409 A1**
(43) Date of publication of application: **01.10.2025**
(21) Application number: 24741348.7
(22) Date of filing: 12.01.2024
(51) Int. Cl.: G10L 15/22

(54) **VOICE INTERACTION METHOD AND APPARATUS, AND RELATED DEVICE**

(30) Priority: 12.01.2023 CN 202310096785
(71) Applicant: Hangzhou Lingban Technology Co., Ltd., Hangzhou, Zhejiang 310000 (CN)
(72) Inventor: FU, Jiqiang, Hangzhou, Zhejiang 310000 (CN); LIU, Shenghua, Hangzhou, Zhejiang 310000 (CN); WANG, Wenbing, Hangzhou, Zhejiang 310000 (CN)
(74) Representative: Huang, Liwei
(86) International application number: PCT/CN2024/071940
(87) International publication number: WO 2024/149352

(57) **Abstract**

This application provides a voice interaction method and apparatus, and a related device. The method includes: obtaining, by an audio collecting unit that is based on an augmented reality device, a voice command of a user; determining a type of a target device connected to the augmented reality device; when the target device is of a first type, determining that a target responding mode for the voice command is a first responding mode; when the target device is of a second type or the target device is not detected, determining that the target responding mode for the voice command is a second responding mode; and responding to the voice command by using the target responding mode. Technical support is provided to enable the augmented reality device to normally perform voice interaction in a scenario in which the augmented reality device is not connected to the target device or is connected to different target devices.

## Description

### CROSS-REFERENCE TO RELATED APPLICATIONS

This application claims priority to Chinese patent application No. 202310096785.6, with the China National Intellectual Property Administration on January 12, 2023, which is incorporated herein by reference in its entirety.

### TECHNICAL FIELD

This application relates to the voice interaction field, and in particular, to a voice interaction method and apparatus, and a related device.

### BACKGROUND

Generally, an augmented reality device is used to display or collect sensor data. In most cases, the augmented reality device can be used only when the augmented reality device is connected to a terminal device adapted to the augmented reality device.

### SUMMARY

This application provides a voice interaction method and apparatus, and a related device, to at least resolve the foregoing technical problems in the prior art.

According to a first aspect of this application, a voice interaction method is provided, where the method includes:
obtaining, by an audio collecting unit that is based on an augmented reality device, a voice command of a user;
determining a type of a target device connected to the augmented reality device;
when the target device is of a first type, determining that a target responding mode for the voice command is a first responding mode;
when the target device is of a second type or the target device is not detected, determining that the target responding mode for the voice command is a second responding mode; and
responding to the voice command by using the target responding mode.

In the foregoing solution, the responding to the voice command by using the target responding mode includes:
when the target responding mode is the first responding mode, responding, by the target device, to the voice command; and
when the target responding mode is the second responding mode, determining, based on a type of the voice command, that one of the augmented reality device and the target device responds to the voice command.

In the foregoing solution, the determining, based on a type of the voice command, that one of the augmented reality device and the target device responds to the voice command includes:
responding, by the augmented reality device, to the voice command when the voice command is a command of a first type; and
responding, by the target device, to the voice command when the voice command is a command of a second type.

In the foregoing solution, the responding, by the target device, to the voice command when the voice command is a command of a second type includes:
when the voice command is the command of the second type, converting the voice command into a command of a target type, and responding, by the target device, to the command of the target type.

In the foregoing solution, the audio collecting unit is configured to collect target voice data, and the target voice data includes the voice command; and
the method further includes:
obtaining the voice command by determining whether the voice command exists in the target voice data;
and/or sending the target voice data to the target device.

In the foregoing solution, the obtaining the voice command by determining whether the voice command exists in the target voice data, and/or sending the target voice data to the target device includes:
performing noise reduction processing on the target voice data to obtain noise-reduced target voice data;
obtaining the voice command by determining whether the voice command exists in the noise-reduced target voice data;
and/or sending the noise-reduced target voice data to the target device.

In the foregoing solution, the obtaining the voice command by determining whether the voice command exists in the noise-reduced target voice data, and/or sending the noise-reduced target voice data to the target device includes:
obtaining first target voice data and second target voice data based on the noise-reduced target voice data;
obtaining the voice command by determining whether the voice command exists in the first target voice data;
and/or sending the second target voice data to the target device.

According to a second aspect of this application, a voice interaction apparatus is provided, where the apparatus includes:
an obtaining unit, used by an audio collecting unit that is based on an augmented reality device to obtain a voice command of a user;
a first determining unit, configured to determine a type of a target device connected to the augmented reality device;
a second determining unit, configured to: when the target device is of a first type, determine that a target responding mode for the voice command is a first responding mode;
a third determining unit, configured to: when the target device is of a second type or the target device is not detected, determine that the target responding mode for the voice command is a second responding mode; and
a responding unit, configured to respond to the voice command by using the target responding mode.

According to a third aspect of this application, an augmented reality device is provided, where the augmented reality device includes at least the voice interaction apparatus in this application.

According to a fourth aspect of this application, an electronic device is provided, including
at least one processor; and
a memory communicatively connected to the at least one processor, where
the memory stores instructions executable by the at least one processor, and the commands are executed by the at least one processor to cause the at least one processor to perform the method in this application.

In this application, an audio collecting unit that is based on an augmented reality device obtains a voice command of a user; determines a type of a target device connected to the augmented reality device; when the target device is of a first type, determines that a target responding mode for the voice command is a first responding mode; when the target device is of a second type or the target device is not detected, determines that the target responding mode for the voice command is a second responding mode; and responds to the voice command by using the target responding mode. Technical support is provided to enable the augmented reality device to normally perform voice interaction in a scenario in which the augmented reality device is not connected to the target device or is connected to different target devices.

It should be understood that content described in this section is not intended to identify key or important features of embodiments of this application, and is not intended to limit the scope of this application. Other features of this application are easily understood by using the following specification.

### BRIEF DESCRIPTION OF DRAWINGS

Through reading of the following detailed descriptions with reference to the accompanying drawings, the foregoing and other objectives, features, and advantages of exemplary embodiments of this application will become readily understood. In the accompanying drawings, several implementations of this application are shown by way of example rather than limitation, in which:

In the accompanying drawings, same or corresponding reference numerals represent a same part or corresponding parts.
FIG. 1 is a schematic diagram of an implementation procedure of a voice interaction method according to an embodiment of this application.
FIG. 2 is a schematic diagram 1 of an implementation procedure of different target responding modes according to an embodiment of this application.
FIG. 3 is a schematic diagram 2 of an implementation procedure of different target responding modes according to an embodiment of this application.
FIG. 4 is a schematic diagram of a data flow at an augmented reality device end according to an embodiment of this application.
FIG. 5 is a schematic structural diagram of a composition of a voice interaction apparatus according to an embodiment of this application.
FIG. 6 is a schematic structural diagram of a composition of an electronic device according to an embodiment of this application.

### DETAILED DESCRIPTION OF THE EMBODIMENTS

To make the objectives, features, and advantages of this application more obvious and easier to understand, the following clearly and completely describes the technical solutions in embodiments of this application with reference to the accompanying drawings in the embodiments of this application. Clearly, the described embodiments are merely some rather than all of the embodiments of this application. Based on embodiments of this application, all other embodiments obtained by a person skilled in the art without creative efforts fall within the protection scope of this application.

In a related technology, an augmented reality device can only communicate with a terminal device adapted to the augmented reality device, which cannot reflect flexibility and versatility of the augmented reality device.

It may be understood that an augmented reality (AR, Augmented Reality) device is a currently mainstream wearable device, and as a mainstream interaction manner of the augmented reality device, intelligent voice interaction can liberate both hands, thereby easily and quickly implementing input into or manipulation of the augmented reality device. Considering factors such as appearance, wearing, power consumption, and heat generation, the augmented reality device is generally not used as a complex computing unit, but is only used for a display (projection) and sensor data collecting function (such as an image, audio, or an inertial measurement unit). Based on this, the augmented reality device can be connected, only in a wired or wireless manner, to a terminal device adapted to the augmented reality device, and collected sensor data is sent to the terminal device for algorithm calculation. If the augmented reality device can normally perform voice interaction when the augmented reality device is not connected to the terminal device or is connected to another terminal device, functions of the augmented reality device are inevitably expanded. In this way, a foundation may be laid for widespread application of the augmented reality device in daily life.

Technical solutions in the embodiments of this application relate to a voice interaction solution. The augmented reality device may perform voice interaction with different types of target devices, or may perform voice interaction without being connected to a target device, which reflects versatility and flexibility of the augmented reality device. Based on an obtained voice command and a type of the target device connected to the augmented reality device, different target responding modes may be used to respond to the voice command. Technical support is provided to enable the augmented reality device to normally perform voice interaction in a scenario in which the augmented reality device is not connected to the target device or is connected to different target devices, thereby expanding use scenarios of the augmented reality device.

The voice interaction method in the embodiments of this application is described in detail below.

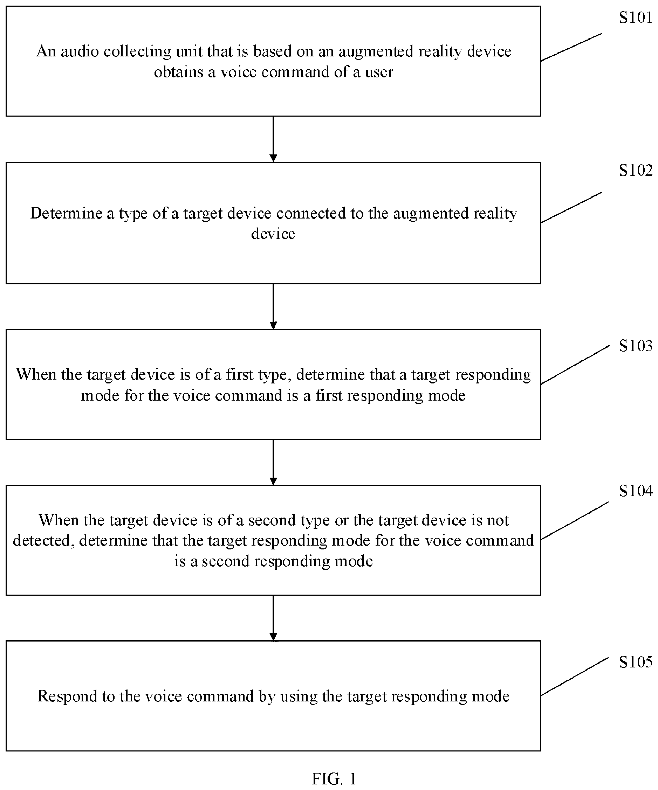

An embodiment of this application provides a voice interaction method. As shown in FIG. 1, the method includes the following steps:
S101: An audio collecting unit that is based on an augmented reality device obtains a voice command of a user.

In this step, the augmented reality device is an electronic device that can perform AR interaction. The augmented reality device may be a smart wearable device, including but not limited to smart glasses and a smart watch. In this application, as an example for description, the augmented reality device is split AR glasses.

The augmented reality device includes the audio collecting unit, such as a microphone. In this step, a voice command sent by the user to the augmented reality device is collected through the microphone, to obtain the voice command of the user.

It may be understood that the microphone includes a microphone array sensor (MicArray) that is configured to collect the voice command sent by the user to the augmented reality device.

In actual application, the user may send the voice command to the augmented reality device when the augmented reality device is not used. For example, when the augmented reality device displays a black screen, a voice command such as "wake up the screen" or "power off" is sent to the augmented reality device.

The user may also send the voice command to the augmented reality device when the augmented reality device is used, for example, when a movie is projected or a song is played by using the augmented reality device. In other words, in a case that the augmented reality device is used to output multimedia data, the audio collecting unit that is based on the augmented reality device obtains the voice command of the user.

It may be understood that the augmented reality device generally outputs some multimedia data such as an image and audio in a process of performing AR interaction. In a case that the augmented reality device is connected to a target device, a video in the target device may be projected to the augmented reality device for output, for example, a movie in the target device is projected to the augmented reality device for output. In this case, the multimedia data may refer to a video in the target device that can be projected by the AR device. Alternatively, audio in the target device may be output by using the augmented reality device, for example, the augmented reality device is used to answer call voice or a voice call. In this case, the multimedia data may refer to audio in the target device that can be output by the AR device.

In other words, in a case that the augmented reality device in this application is connected to the target device, the augmented reality device serves as a substitute for the target device to output audio/video. This alternative solution mainly considers that in some application scenarios, using the target device as an audio/video output device is far less convenient and has a poorer output effect than using the augmented reality device as the audio/video output device. For example, in an application scenario of projection, a projectable video in the target device is projected by using the augmented reality device, so that immersive experience can be created for a wearer of the augmented reality device. For another example, in some scenarios in which an answering environment is crowded, for example, in a case of an early or late peak of a metro, because a crowded metro is inconvenient to answer an incoming call of the target device, the incoming call may be answered by using split AR glasses worn. The split AR glasses may be built into ordinary glasses worn by a wearer, and the split AR glasses may be used to answer the incoming call, to avoid a case that it is unable to take out a mobile phone from the pocket in a crowded environment to answer the incoming call.

The user may send the voice command to the augmented reality device as required. The augmented reality device, specifically the microphone, collects the voice command.

For example, when the augmented reality device is split AR glasses, it is assumed that a current scenario is that the user plays audio/video by using the split AR glasses. In this case, multimedia data output by the split AR glasses is audio/video information played by the user. When the user sends a voice command "increase the volume", the user collects, through the microphone, this voice command sent by the user, to obtain a voice command for playing the audio/video, so as to increase the current volume of playing the audio/video by responding to the voice command.

S102: Determine a type of a target device connected to the augmented reality device.

In this step, the target device may be any device that performs voice interaction with the augmented reality device. The target device is a device such as a smartphone, a computer, or a personal digital assistant. The type of the target device connected to the augmented reality device in this application may be terminals of different types. For example, the target device is a self-developed terminal, that is, a terminal adapted to the augmented reality device. It may be understood that, after the augmented reality device is produced by a manufacturer, there is usually a self-developed terminal that is produced by the manufacturer and that is adapted to the augmented reality device. The self-developed terminal may be understood as a terminal of a normal size that has no display screen or a relatively small display screen but has a computing capability. The augmented reality device is connected to an adapted self-developed terminal to implement an intelligent voice interaction function of the augmented reality device.

The target device may alternatively be another type of terminal, such as a third-party mobile phone or a third-party computer. In this application, the augmented reality device is connected to another type of terminal to implement the intelligent voice interaction function of the augmented reality device. For example, when the augmented reality device is split AR glasses, the split AR glasses may be connected to a terminal adapted to the split AR glasses, or may be connected to a third-party terminal. In this application, the split AR glasses may perform intelligent voice interaction with a device connected to the split AR glasses, regardless of whether the split AR glasses are connected to the terminal adapted to the split AR glasses or the split AR glasses are connected to the third-party terminal.

In actual application, as a mainstream interaction manner of the augmented reality device, voice interaction is generally limited to the self-developed terminal. In other words, if the user wants to use the augmented reality device, the user needs to purchase the self-developed terminal adapted to the augmented reality device to normally perform voice interaction. In this case, in one aspect, if the user already has a mobile phone, the user does not purchase an additional adapted terminal due to costs and portability considerations. In another aspect, in a scenario in which the augmented reality device accesses a personal computer (PC, Personal Computer), the PC is used as a computing unit, and the augmented reality device no longer accesses a terminal. In the foregoing two scenarios, the voice interaction function of the augmented reality device becomes unavailable, which significantly limits a use scenario of voice interaction in the AR glasses.

In this application, the augmented reality device may access different types of terminals, and the intelligent voice interaction function of the augmented reality device is implemented through determining of the type of the target device connected to the augmented reality device. Alternatively, the augmented reality device may not access any type of terminal, and a voice command control application of the augmented reality device is used to implement some basic voice interaction functions, such as adjusting volume and adjusting brightness.

In actual application, the augmented reality device may access different types of terminals, or may not access any terminal, so that the user may choose to purchase only the augmented reality device, and does not need to purchase the self-developed terminal adapted to the augmented reality device, but directly connects the augmented reality device to a mobile phone or a computer of the user, to implement the voice interaction function of the augmented reality device.

S103: When the target device is of a first type, determine that a target responding mode for the voice command is a first responding mode.

In this application, the augmented reality device may access or be connected to different types of terminals. Different types of target devices connected to the augmented reality device lead to different responding modes for the voice command.

In this application, the type of the target device includes the first type and a second type. The first type is a terminal that includes a voice keyword detection technology service, for example, the foregoing self-developed terminal. The second type is a terminal that does not include a voice keyword detection technology service, for example, a terminal such as the foregoing third-party mobile phone end or computer end.

For example, it is assumed that the target device connected to the augmented reality device is the foregoing self-developed terminal, and in this case, a corresponding target responding mode for the voice command may be a mode A (the first responding mode). It is assumed that the target device connected to the augmented reality device is the foregoing another type of terminal (the third-party mobile phone end, the computer end, or the like), and in this case, a corresponding target responding mode for the voice command may be a mode B (a second responding mode).

During implementation, the augmented reality device recognizes whether the augmented reality device is connected to the target device. If the augmented reality device is not connected to a device, it is determined that the target responding mode for the voice command is the second responding mode. If the augmented reality device is connected to a device, an identifier of the connected device is obtained, and whether the device connected to the augmented reality device is of the first type or the second type is determined based on the identifier of the connected device. If the identifier of the connected device is an identifier A, and the identifier A is an identifier representing a device of the first type, it is determined that the device connected to the augmented reality device is of the first type. If the identifier of the connected device is an identifier B, and the identifier B is an identifier representing a device of the second type, it is determined that the device connected to the augmented reality device is of the second type.

In this application, two responding modes are preset based on whether the terminal connected to the augmented reality device is a terminal adapted to the augmented reality device or a third-party terminal not adapted to the augmented reality device. One responding mode is a mode used when the terminal connected to the augmented reality device is a terminal adapted to the augmented reality device. The other responding mode is a mode used when the terminal connected to the augmented reality device is a third-party terminal. Two different types of terminals and modes that need to be used for the types of terminal are set to a correspondence in advance. During implementation, based on a type of the terminal connected to the augmented reality device, the correspondence is searched to find a mode corresponding to the terminal of this type as the target responding mode for responding to the voice command.

S104: When the target device is of a second type or the target device is not detected, determine that the target responding mode for the voice command is a second responding mode.

The target device of the second type is a terminal that does not include the voice keyword detection technology service. Therefore, to ensure that the augmented reality device can still perform voice interaction when accessing the target device of the second type, the augmented reality device in this application needs to use the voice keyword detection technology service to implement normal voice interaction of the augmented reality device when the augmented reality device is connected to the target device of the second type. In addition, the augmented reality device in this application includes the voice keyword detection technology service. Therefore, when the augmented reality device is not connected to the target device, that is, the target device is not detected, the augmented reality device may also perform basic voice interaction by using the corresponding target responding mode, for example, adjust brightness and adjust volume.

In this application, a low-power-consumption voice keyword detection technology service is deployed in the augmented reality device, and the voice command is recognized by using the low-power-consumption voice keyword detection technology service without significantly increasing power consumption of the augmented reality device or heating the augmented reality device.

Different target responding modes are implemented on different types of terminals, so that the augmented reality device can maintain the voice interaction capability while accessing different types of terminals.

S105: Respond to the voice command by using the target responding mode.

Different target responding modes are used for different types of connected target devices to respond to the voice command, that is, different target responding modes are used to analyze a type of the voice command and process the command. For example, if it is learned through analysis that the voice command is a voice command "increase the volume", output volume of the augmented reality device is increased; and if it is learned through analysis that the voice command is a command "reduce brightness of the screen", brightness of a screen of the augmented reality device is reduced. In this way, an operation corresponding to the voice command is implemented.

In the solution shown in S101 to S105, the augmented reality device can not only communicate with an adapted terminal and the third-party terminal, but can also perform voice interaction without accessing any terminal. This reflects flexibility and versatility of the augmented reality device.

In addition, in this application, the target responding mode may be determined based on the type of the target device connected to the augmented reality device, and a response to the voice command is made by using the target responding mode. Based on the type of the target device connected to the augmented reality device, different target responding modes may be used to respond to the voice command. In this way, the augmented reality device maintains the voice interaction capability while accessing different types of terminals. Technical support is provided to enable the augmented reality device to normally perform voice interaction in a scenario in which the augmented reality device is connected to different target devices.

In an optional solution, the responding to the voice command by using the target responding mode includes:
when the target responding mode is the first responding mode, responding, by the target device, to the voice command; and
when the target responding mode is the second responding mode, determining, based on a type of the voice command, that one of the augmented reality device and the target device responds to the voice command.

The type of the voice command represents that the voice command is of a command type that is responded to by the augmented reality device or a command type that is responded to by the target device.

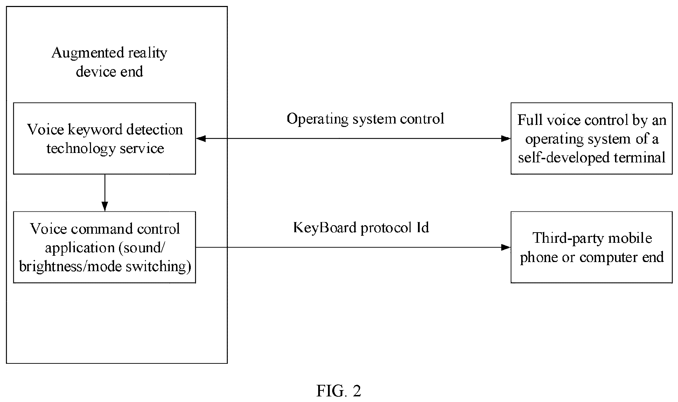

As shown in FIG. 2, in this application, two types of responding bodies are mainly involved: the target device and the augmented reality device. The augmented reality device mainly includes the voice keyword detection technology service and the voice command control application. When the target responding mode is the first responding mode, that is, it is determined, based on that the type of the target device connected to the augmented reality device is the first type such as the self-developed terminal, that the target responding mode is the first responding mode, an operating system of the target device performs full voice control over the voice command. When the target responding mode is the second responding mode, that is, it is determined, based on that the type of the target device connected to the augmented reality device is the second type such as a third-party mobile phone or computer or that the target device is not detected, that the target responding mode is the second responding mode, the voice command is converted into an Event Id, the voice command control application in the augmented reality device is notified of the Event Id, and the voice command control application determines whether the command is a control instruction of the augmented reality device. If the command is the control instruction of the augmented reality device, the voice command control application responds to the voice command, for example, adjust volume or adjust brightness. If the voice command is a command controlled by the target device, the Event Id is converted into a universal keyboard (USB KeyBoard, UniversalSerialBus KeyBoard) protocol Id, and the USB KeyBoard Id is sent to the target device, and the target device responds to the voice command.

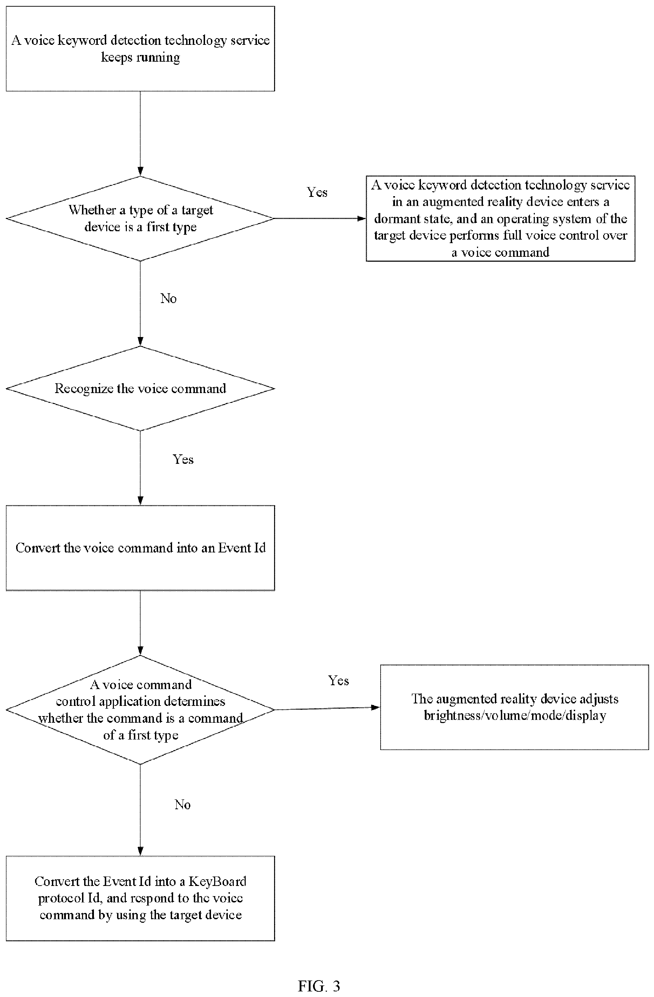

Specifically, as shown in FIG. 3, the voice keyword detection technology service of the augmented reality device is in a running state, and the voice keyword detection technology service determines whether the target device connected to the augmented reality device is of the first type or the second type. Different target responding modes are adopted through determining of the type of the accessed target device. When the target responding mode is the first responding mode, that is, it is determined, based on that the type of the target device connected to the augmented reality device is the first type such as the self-developed terminal, that the target responding mode is the first responding mode, the voice keyword detection technology service in the augmented reality device enters a dormant state, and an operating system of the target device performs full voice control over the voice command. For example, it is assumed that the target device connected to the augmented reality device is the self-developed terminal. Because the self-developed terminal includes the voice keyword detection technology service, there is generally a predefined voice command set on the self-developed terminal. For example, a volume increase instruction is to adjust the sound of multimedia data, a brightness increase instruction is to adjust display brightness of a screen, and a mode switching instruction is to adjust a display mode of multimedia data, for example, from a normal mode to a 3D mode, or from a 3D mode to a normal mode.

After the user sends the corresponding voice command, the augmented reality device determines that the accessed target device is the self-developed terminal, and the operating system of the target device performs full voice control over the voice command collected by the augmented reality device. The voice keyword detection technology service running on the self-developed terminal sends the voice command to the self-developed terminal. The self-developed terminal, specifically an application processing unit, responds to the voice command and executes an operation action corresponding to the voice command, such as adjust sound, adjust brightness, or switch a mode.

The voice command obtained by the augmented reality device is a (sound adjustment) instruction for adjusting the sound of multimedia data output by the augmented reality device. If the target device connected to the augmented reality device is a self-developed terminal adapted to the augmented reality device, the self-developed terminal processes the voice adjustment instruction, to adjust, by using the self-developed terminal, the sound of the multimedia data output by the augmented reality device.

The voice command obtained by the augmented reality device is a command for adjusting display brightness of multimedia data output by the augmented reality device. If the target device connected to the augmented reality device is a self-developed terminal adapted to the augmented reality device, the self-developed terminal processes the display brightness adjustment instruction, to adjust display brightness of the screen of the augmented reality device by using the self-developed terminal.

The voice command obtained by the augmented reality device is a command for adjusting a display mode of multimedia data output by the augmented reality device. If the target device connected to the augmented reality device is a self-developed terminal adapted to the augmented reality device, the self-developed terminal process the display mode adjustment instruction, to adjust, by using the self-developed terminal, the display mode of the multimedia data output by the augmented reality device.

When the target responding mode is the second responding mode, that is, when it is determined, based on that the type of the target device connected to the augmented reality device is the second type such as a third-party mobile phone or computer or that the target device is not detected, that the target responding mode is the second responding mode, the voice keyword detection technology service of the augmented reality device keeps running.

In an optional solution, the determining, based on a type of the voice command when the target responding mode is the second responding mode, that one of the augmented reality device and the target device responds to the voice command includes:
responding, by the augmented reality device, to the voice command when the voice command is a command of a first type; and
responding, by the target device, to the voice command when the voice command is a command of a second type.

In this application, when the target responding mode is the second responding mode, the voice command also includes two types. a command of a first type is a command that the augmented reality device can respond to, such as the foregoing sound adjustment instruction, the display brightness adjustment instruction, or the display mode adjustment instruction. a command of a second type is a command that the augmented reality device cannot respond to but the target device can respond to, such as a "return to the previous step" instruction, a "determine" instruction, or a "main menu" instruction.

In this application, in a case that the target responding mode is the second responding mode, if the voice command is a command that the augmented reality device can respond to, such as the sound adjustment instruction, the display brightness adjustment instruction, or the display mode adjustment instruction, the augmented reality device responds to the voice command. If the voice command is a "return to the previous step" instruction, an "OK" instruction, a "main menu" instruction, or the like, the target device responds to the voice command.

Based on this, in this application, in the second responding mode, a solution in which different responding bodies respond to the voice command based on different types of voice commands can avoid a problem of a heavy load that is caused when all voice commands are responded to by one of the responding bodies. In this application, different types of voice commands are responded to by different responding bodies, which is easy to implement in terms of engineering and is highly feasible.

In an optional solution, the responding, by the target device, to the voice command when the voice command is a command of a second type includes:
when the voice command is the command of the second type, converting the voice command into a command of a target type, and responding, by the target device, to the command of the target type.

In this application, if the voice command is a command that the augmented reality device cannot respond to but the target device can respond to, the voice command needs to be converted into a type that the target device can recognize or respond to, so as to respond to the voice command.

For example, it is assumed that the target device connected to the augmented reality device is a third-party mobile phone or a computer end. After the voice keyword detection technology service in the augmented reality device recognizes the voice command, the voice command is converted into an Event Id, and the voice command control application in the augmented reality device is notified of the Event Id. After receiving the command Event Id, the voice command control application establishes a correspondence between the command Event Id and a number corresponding to a predefined instruction function, and makes corresponding feedback based on the predefined instruction function represented by the corresponding number. The predefined instruction function is instruction functions represented by different numbers in a predefined instruction set, for example, number 1 represents a sound increasing function, number 2 represents a brightness increasing function, and number 3 represents a mode switching function.

When a command corresponding to the command Event Id is the command of the first type, that is, when there is a correspondence between the command Event Id and the number corresponding to the command function predefined for the augmented reality device, that is, the command corresponding to the command Event Id is a control-related instruction that the augmented reality device can respond to, for example, a command related to hardware of the augmented reality device, such as sound adjustment, brightness adjustment, display switching, or mode switching, the voice command control application directly completes a corresponding control operation by using a system application programming interface (API, Application Programming Interface). When the command corresponding to the command Event Id is the command of the second type, that is, when there is a correspondence between the command Event Id and the number corresponding to the command function predefined for the target device, that is, when the command corresponding to the command Event Id is a command that needs to be responded to by the target device, the command Event Id is converted into a USB KeyBoard protocol Id and sent to the accessed target device. The target device responds to the USB KeyBoard protocol Id and performs an operation on multimedia data that is output by the augmented reality device. For example, a command "return to the previous step" is defined as an "F1" key on a keyboard of the target device. When the user taps the "F1" key, the multimedia data that is output by the augmented reality device returns to a previous operation. Alternatively, "main menu" is defined as an "F2" key on a keyboard of the target device. When the user taps the "F2" key, the augmented reality device pops up a main menu interface. Alternatively, "OK" may be defined as an "enter" key on a keyboard of the target device, and a confirmation operation may be performed when the user taps the "enter" key.

The foregoing execution process of the augmented reality device in this application may be implemented by using a high-performance dedicated chip disposed in the augmented reality device. Disposing of the high-performance dedicated chip can improve computing efficiency, and implement a quick response to the voice command. In addition, in this application, the low-power voice keyword detection technology service is used, which has significant advantages such as low required computing power and low resource consumption. In a case that power consumption is not significantly increased, an AR capability is imparted to the augmented reality device, and a control capability of the augmented reality device is significantly improved. In addition, the voice command may be customized and expanded, to make up for a disadvantage of key control. By using the universal USB KeyBoard protocol, the augmented reality device converts the recognized voice command into a target type that can be recognized or responded to by the target device, and responding by the target device to the voice command is considered as a response to the voice command that is made by the user by operating a key (for example, the "F1" key on the keyboard of the target device, the "F2" key on the keyboard of the target device, and the "enter" key on the keyboard of the target device). This solution is equivalent to using the augmented reality device as a control peripheral of the target device, and imparting a voice interaction capability to the target device in a case of low-cost access. The product competitiveness of the augmented reality device is added in actual application.

In an optional solution, the audio collecting unit is configured to collect target voice data, and the target voice data includes the voice command; and
the method further includes:
obtaining the voice command by determining whether the voice command exists in the target voice data;
and/or sending the target voice data to the target device.

In this solution, the augmented reality device further includes a keyword detection unit and a control application unit. The keyword detection unit includes the voice keyword detection technology service that is used to determine a type of the accessed target device and recognize the voice command. The control application unit includes the voice command control application that is used to determine a command type and send instructions of different types to different responding bodies for making a response. The target voice data includes the voice command and/or voice data generated when the augmented reality device outputs multimedia data.

It may be understood that the voice command in this application is a command entered into the augmented reality device in a voice form, and is a type of instruction data. Target voice data collected by the microphone array sensor may be instruction data. In addition, the voice data collected by the microphone array sensor may be voice data generated during outputting of multimedia data. For example, when a call is answered by using the augmented reality device, the voice data collected by the microphone array sensor may be call content. Alternatively, when a movie is projected by using the augmented reality device, the voice data collected by the microphone array sensor may be audio content in the movie.

The augmented reality device collects the target voice data by using the microphone array sensor, and recognizes whether the target voice data includes the voice command and/or includes voice data generated when the augmented reality device outputs multimedia data. If it is recognized that the target voice data includes both the voice command and the voice data generated when the augmented reality device outputs the multimedia data, the two types of voice data may be separated, to perform different processing on the two types of voice data.

When the target voice data includes the voice command, the augmented reality device determines different target device types by using the keyword detection unit, to use different responding modes. Specifically, when the target device is of the first type, the target device responds to the voice command. When the target device is of the second type or the target device is not detected, the keyword detection unit recognizes the voice command, and the control application unit determines different instruction types, to select different responding bodies to respond to the voice command.

When the target voice data includes the voice data generated when the augmented reality device outputs the multimedia data, the voice data may be sent to the target device, and the target device performs processing such as recording and semantic recognition on the voice data.

In the foregoing solution, the collected target voice data is transmitted to an augmented reality device end and/or a target device end, which is easy to implement in engineering, and normal use of the target voice data by the augmented reality device end and/or the target device is ensured.

In an optional solution, the obtaining the voice command by determining whether the voice command exists in the target voice data, and/or sending the target voice data to the target device includes:
performing noise reduction processing on the target voice data to obtain noise-reduced target voice data;
obtaining the voice command by determining whether the voice command exists in the noise-reduced target voice data;
and/or sending the noise-reduced target voice data to the target device.

In this solution, the augmented reality device further includes a noise reduction unit, configured to perform noise reduction processing on the target voice data to obtain the noise-reduced target voice data. The augmented reality device collects the target voice data by using the microphone array sensor, and performs noise reduction processing on the collected target voice data by using the noise reduction unit to obtain the noise-reduced target voice data. The noise-reduced target voice data is transmitted to the augmented reality device end and/or the target device end. When the target voice data includes the voice command, the augmented reality device end determines different target device types by using the keyword detection unit, to use different responding modes. When the type of the target device is the first type, the target device responds to the voice command. When the type of the target device is the second type or the target device is not detected, the keyword detection unit recognizes the voice command, and the control application unit determines different instruction types, to select different responding bodies to respond to the voice command.

When the target voice data includes the voice data generated when the augmented reality device outputs the multimedia data, the noise-reduced voice data may be sent to the target device, and the target device performs processing such as recording and semantic recognition on the noise-reduced voice data.

Noise reduction is performed on the collected target voice data, so that the noise-reduced target voice data is voice data that does not include noise or includes less noise, and therefore, quality of the voice data transmitted to the augmented reality device end and/or the target device end can be improved, thereby accurately responding to the target voice data.

In an optional solution, the obtaining the voice command by determining whether the voice command exists in the noise-reduced target voice data, and/or sending the noise-reduced target voice data to the target device includes:
obtaining first target voice data and second target voice data based on the noise-reduced target voice data;
obtaining the voice command by determining whether the voice command exists in the first target voice data;
and/or sending the second target voice data to the target device.

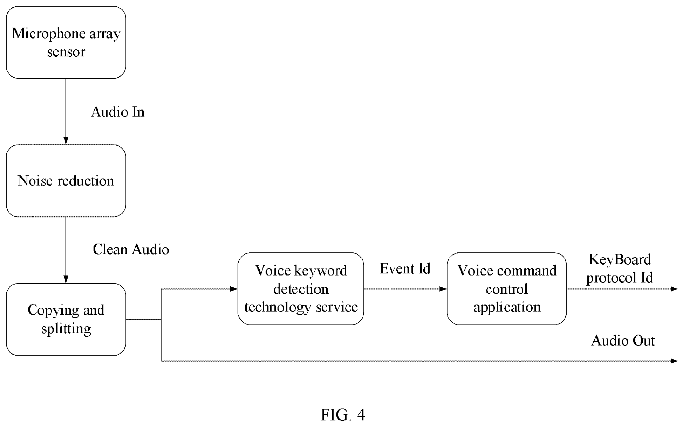

In this solution, the augmented reality device further includes a copying and splitting unit, configured to copy the noise-reduced target voice data to obtain two pieces of noise-reduced target voice data, and split the two pieces of noise-reduced target voice data to obtain the first target voice data and the second target voice data. As shown in FIG. 4, the augmented reality device sends the read microphone audio data Audio In to a specific noise reduction unit for directional noise reduction, to obtain enhanced audio data Clean Audio that includes no noise or less noise, and after the audio data that includes no noise or less noise passes through the copying and splitting unit, the first target voice data and the second target voice data are obtained. It may be understood that both the first target voice data and the second target voice data are voice data that is the same as noise-reduced Clean Audio that includes no noise or less noise. The second target voice data is directly transmitted to the target device Audio Out in a wired or wireless manner by using hardware, and the first target voice data is processed by the augmented reality device end. Further, when the voice command exists in the target voice data, the augmented reality device end obtains the voice command, and determines different target device types by using the keyword detection unit, to use different responding modes. Specifically, when the target device is of the first type, the target device responds to the voice command. When the target device is of the second type or the target device is not detected, the keyword detection unit recognizes the voice command, and the control application unit determines different instruction types, to select different responding bodies to respond to the voice command.

Copying and splitting the noise-reduced target voice data to obtain the first target voice data and the second target voice data and processing the first target voice data by the augmented reality device end is a solution used to perform voice command recognition and responded to by different responding bodies. The second target voice data is transmitted to the target device end, so that the collected target voice data is used by another application of the target device. For example, when the user makes a call, the collected target voice data is used as call content and used by a call application of the target device. Copying and splitting the noise-reduced target voice data can ensure that applications of both the augmented reality device end and the target device end can obtain respective required audio data without interference.

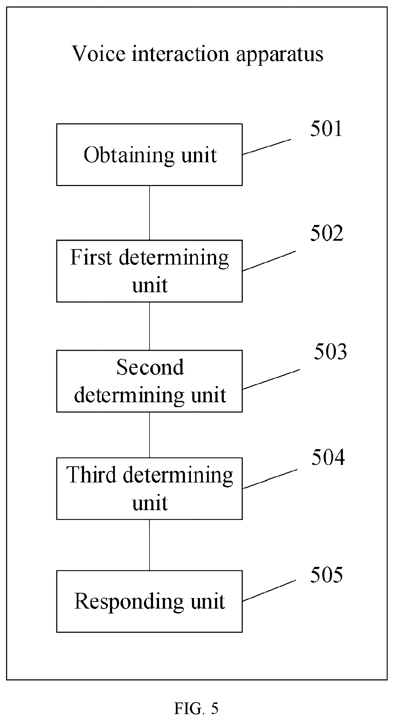

An embodiment of this application provides a voice interaction apparatus. As shown in FIG. 5, the apparatus includes:
an obtaining unit 501, used by an audio collecting unit that is based on an augmented reality device to obtain a voice command of a user;
a first determining unit 502, configured to determine a type of a target device connected to the augmented reality device;
a second determining unit 503, configured to: when the target device is of a first type, determine that a target responding mode for the voice command is a first responding mode;
a third determining unit 504, configured to: when the target device is of a second type or the target device is not detected, determine that the target responding mode for the voice command is a second responding mode; and
a responding unit 505, configured to respond to the voice command by using the target responding mode.

In an optional solution, the responding unit 505 is configured to: when the target responding mode is the first responding mode, send the voice command to the target device for making a response; and when the target responding mode is the second responding mode, determine, based on a type of the voice command, that one of the augmented reality device and the target device responds to the voice command.

In an optional solution, the responding unit 505 is configured to: when the voice command is a command of a first type, respond, by the augmented reality device, to the voice command; and when the voice command is a command of a second type, respond, by the target device, to the voice command.

In an optional solution, the responding unit 505 is configured to: when the voice command is the command of the second type, convert the voice command into a command of a target type, and respond, by the target device, to the command of the target type.

In an optional solution, the audio collecting unit is configured to collect target voice data, and the target voice data includes the voice command; and
the apparatus further includes:
a voice data unit, configured to obtain the voice command by determining whether the voice command exists in the target voice data, and/or send the target voice data to the target device.

In an optional solution, the apparatus further includes a noise reduction unit. The noise reduction unit is configured to perform noise reduction processing on the target voice data to obtain noise-reduced target voice data. Correspondingly, the voice data unit is further configured to: obtain the voice command by determining whether the voice command exists in the noise-reduced target voice data; and/or send the noise-reduced target voice data to the target device.

In an optional solution, the apparatus further includes a copying and splitting unit. The copying and splitting unit is configured to obtain first target voice data and second target voice data based on the noise-reduced target voice data. Correspondingly, the voice data unit is further configured to: obtain the voice command by determining whether the voice command exists in the first target voice data; and/or send the second target voice data to the target device.

It should be noted that, based on the voice interaction apparatus in this embodiment of this application, because a principle of resolving a problem by the apparatus is similar to that of the foregoing voice interaction method, for an implementation process, an implementation principle, and a beneficial effect of the apparatus, reference may be made to an implementation process, an implementation principle, and a beneficial effect of the foregoing method, and repeated parts are not described again.

An embodiment of this application provides an augmented reality device, and the augmented reality device includes at least the voice interaction apparatus in this application.

According to an embodiment of this application, this application further provides an electronic device.

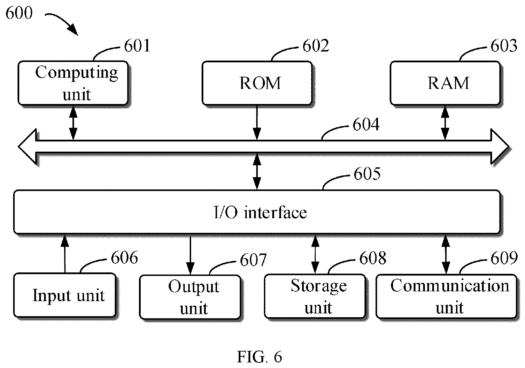

FIG. 6 is a schematic block diagram of an example electronic device 600 that can be used to implement an embodiment of this application. The electronic device is designed to represent various forms of digital computers, such as a laptop computer, a desktop computer, a workbench, a personal digital assistant, a server, a blade server, a mainframe computer, and another suitable computer. The electronic device may further represent mobile apparatuses in various forms, such as a personal digital terminal, a cellular phone, an intelligent phone, a wearable device, and another similar computing apparatus. The components shown in this specification, connections and relationships thereof, and functions thereof are merely examples and are not intended to limit the implementation of this application described and/or claimed in this specification.

As shown in FIG. 6, the electronic device 600 includes a computing unit 601 that may perform various appropriate actions and processing based on a computer program stored in a read-only memory (ROM) 602 or a computer program loaded from a storage unit 608 into a random access memory (RAM) 603. The RAM 603 may further store various programs and data required for an operation of the electronic device 600. The computing unit 601, the ROM 602, and the RAM 603 are connected to each other through a bus 604. An input/output (I/O) interface 605 is also connected to the bus 604.

A plurality of components in the electronic device 600 are connected to the I/O interface 605, including: an input unit 606 such as a keyboard or a mouse; an output unit 607 such as various types of displays and loudspeakers; a storage unit 608 such as a magnetic disk or an optical disc; and a communication unit 609 such as a network adapter, a modem, or a wireless communication transceiver. The communication unit 609 allows the electronic device 600 to exchange information/data with another device through a computer network such as the Internet and/or various telecommunication networks.

The computing unit 601 may be various general-purpose and/or dedicated processing components that have a processing and computing capability. Some examples of the computing unit 601 include but are not limited to a central processing unit (CPU), a graphics processing unit (GPU), various dedicated artificial intelligence (AI) computing chips, various computing units that run machine learning model algorithms, a digital signal processor (DSP), any appropriate processor, controller, or microcontroller, and the like. The computing unit 601 performs various methods and processing described above, for example, the voice interaction method. For example, in some embodiments, the voice interaction method may be implemented as a computer software program, which may be tangibly included in a machine-readable medium, for example, the storage unit 608. In some embodiments, some or all of the computer programs may be loaded and/or installed onto the electronic device 600 via the ROM 602 and/or the communication unit 609. When the computer program is loaded onto the RAM 603 and executed by the computing unit 601, one or more steps of the voice interaction method described above may be performed. Alternatively, in another embodiment, the computing unit 601 may be configured to perform the voice interaction method in any other proper manner (for example, by using firmware).

Various implementations of the systems and technologies described herein may be implemented in a digital electronic circuit system, an integrated circuit system, a field programmable gate array (FPGA), an application specific integrated circuits (ASIC), an application specific standard product (ASSP), a system-on-chip (SOC), a complex programmable logic device (CPLD), computer hardware, firmware, software, and/or a combination thereof. These various implementations may include: being implemented in one or more computer programs, where the one or more computer programs may be executed and/or interpreted on a programmable system including at least one programmable processor, and the programmable processor may be a dedicated or general-purpose programmable processor that may receive data and instructions from a storage system, at least one input apparatus, and at least one output apparatus and transmit the data and the instructions to the storage system, the at least one input apparatus, and the at least one output apparatus.

Program code used to implement the method in this application may be written in any combination of one or more programming languages. The program code may be provided to a processor or a controller of a general-purpose computer, a dedicated computer, or another programmable data processing apparatus, so that when the program code is executed by the processor or the controller, functions/operations specified in the flowchart and/or the block diagram are implemented. The program code may be completely executed on a machine, partially executed on a machine, partially executed on a machine as an independent software package and partially executed on a remote machine, or completely executed on a remote machine or a server.

It should be understood that the steps may be reordered, added, or deleted by using the foregoing various forms of procedures. For example, steps described in this application may be performed in parallel, may be performed in sequence, or may be performed in different sequences, provided that a result expected by the technical solution disclosed in this application can be implemented, which is not limited in this specification.

In addition, terms "first" and "second" are merely used for description purposes, and shall not be understood as indicating or implying relative importance or implicitly indicating a quantity of indicated technical features. Therefore, features defined by "first" and "second" may explicitly or implicitly include at least one of the features. In the description of this application, unless otherwise specifically limited, "a plurality of" means two or more.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A voice interaction method, wherein the method comprises:
obtaining, by an audio collecting unit that is based on an augmented reality device, a voice command of a user;
determining a type of a target device connected to the augmented reality device;
when the target device is of a first type, determining that a target responding mode for the voice command is a first responding mode;
when the target device is of a second type or the target device is not detected, determining that the target responding mode for the voice command is a second responding mode; and
responding to the voice command by using the target responding mode.

2. The method according to claim 1, wherein the responding to the voice command by using the target responding mode comprises:
when the target responding mode is the first responding mode, responding, by the target device, to the voice command; and
when the target responding mode is the second responding mode, determining, based on a type of the voice command, that one of the augmented reality device and the target device responds to the voice command.

3. The method according to claim 2, wherein the determining, based on a type of the voice command, that one of the augmented reality device and the target device responds to the voice command comprises:
responding, by the augmented reality device, to the voice command when the voice command is a command of a first type; and
responding, by the target device, to the voice command when the voice command is a command of a second type.

4. The method according to claim 3, wherein the responding, by the target device, to the voice command when the voice command is a command of a second type comprises:
when the voice command is the command of the second type, converting the voice command into a command of a target type, and responding, by the target device, to the command of the target type.

5. The method according to claim 1, wherein the audio collecting unit is configured to collect target voice data, and the target voice data comprises the voice command; and
the method further comprises:
obtaining the voice command by determining whether the voice command exists in the target voice data;
and/or sending the target voice data to the target device.

6. The method according to claim 5, wherein the obtaining the voice command by determining whether the voice command exists in the target voice data, and/or sending the target voice data to the target device comprises:
performing noise reduction processing on the target voice data to obtain noise-reduced target voice data;
obtaining the voice command by determining whether the voice command exists in the noise-reduced target voice data;
and/or sending the noise-reduced target voice data to the target device.

7. The method according to claim 6, wherein the obtaining the voice command by determining whether the voice command exists in the noise-reduced target voice data, and/or sending the noise-reduced target voice data to the target device comprises:
obtaining first target voice data and second target voice data based on the noise-reduced target voice data;
obtaining the voice command by determining whether the voice command exists in the first target voice data;
and/or sending the second target voice data to the target device.

8. A voice interaction apparatus, wherein the apparatus comprises:
an obtaining unit, used by an audio collecting unit that is based on an augmented reality device to obtain a voice command of a user;
a first determining unit, configured to determine a type of a target device connected to the augmented reality device;
a second determining unit, configured to: when the target device is of a first type, determine that a target responding mode for the voice command is a first responding mode;
a third determining unit, configured to: when the target device is of a second type or the target device is not detected, determine that the target responding mode for the voice command is a second responding mode; and
a responding unit, configured to respond to the voice command by using the target responding mode.

9. An augmented reality device, comprising at least the voice interaction apparatus according to claim 8.

10. An electronic device, comprising:
at least one processor; and
a memory communicatively connected to the at least one processor, wherein
the memory stores instructions executable by the at least one processor, and the commands are executed by the at least one processor to cause the at least one processor to perform the method according to any one of claims 1 to 7.
